# EUROPEAN PATENT SPECIFICATION

(11) **EP 1 967 083 B1**
(45) Date of publication and mention of the grant of the patent: **15.07.2009**
(21) Application number: 06841785.6
(22) Date of filing: 20.11.2006
(51) Int. Cl.: A23N 15/00

(54) **MACHINE FOR CUTTING AND EXTRACTING THE STEM OF VEGETABLES HAVING A TREE-LIKE STRUCTURE AND CUTTING AND EXTRACTION METHOD CARRIED OUT WITH SAID MACHINE**
MASCHINE ZUM SCHNEIDEN UND EXTRAHIEREN DES STÄNGELS VON PFLANZEN MIT BAUMARTIGER STRUKTUR UND MIT DIESER MASCHINE AUSGEFÜHRTES SCHNEID- UND EXTRAKTIONSVERFAHREN
MACHINE DE TRANCHAGE ET D'EXTRACTION DE TIGES DE LEGUMES A STRUCTURE ARBORESCENTE ET PROCEDE DE TRANCHAGE ET D'EXTRACTION DE TIGES DANS LEQUEL EST UTILISEE CETTE MACHINE

(30) Priority: 26.12.2005 ES 200503190; 07.09.2006 ES 200602298
(43) Date of publication of application: 10.09.2008
(73) Proprietor: Componosollertia, S.A.L., 31500 Tudela (ES)
(72) Inventor: COMIN ESCARTIN, Ricardo, 31500 Tudela (ES)
(74) Representative: Esteban Perez-Serrano, Maria Isabel
(86) International application number: PCT/ES2006/070178
(87) International publication number: WO 2007/074199

(56) References cited:
- EP-A- 1 293 135
- EP-A1- 1 462 012
- FR-A- 2 746 262
- US-A1- 3 754 470
- US-A1- 4 241 096

## Description

### OBJECT OF THE INVENTION

This invention refers to a machine for the cutting and extraction of the stem of vegetables with tree-like structure and the cutting and extraction method of the stem with this machine which provides pieces branched into different sizes of the edible part of the vegetable.

The machine is characterised as constituted by at least one tray in which the vegetable to be cut is deposited which slides by means of a horizontal structure and by several vertical slide guides with several cutting devices which consist of a cutting device for the separation of the useful tree-like material, a cutting device for the division of the stem into pieces and a cutting device for the separation of the stem from the edible part.

### BACKGROUND OF THE INVENTION

Machines for cutting vegetables are known from document US-A-4241096.
For example, the patent with publication number ES2012243 "Machine for cutting broccoli and cabbage" is known which consists of a machine which has the characteristic of being organised on a table, which supports a cart, which by means of telescopic supports and mechanical drives is susceptible to verify elevation and descent movements, where this cart is equipped with multiple pistons located in an oblique position, supported by arms which act as pedestals in which the respective knives are adapted with a curvilinear type and inclined cut.

This invention only performs the cutting of the vegetables and does not possess any device which allows it to perform, at the same time, the extraction of the stem or the non-edible part of the vegetable, it also does not possess any device which permits its automatic adaptation to the different sizes of said vegetables.

A greater degree of automation is shown by the machine described in the Spanish patent with publication number ES2112535 referred to "Device to extract the core of agricultural products".

This machine uses several product transport trays on which the knives strike in order to eliminate the core. In this machine there is no automatic adjustment of the height of the trays depending on the size of the vegetable, thus the vegetables must be preselected according to the manual adjustment of the tray height.
In relation to this patent ES2112535, the invention recommended here presents a simpler implementation, which also permits the extraction of the core or stem, a division of the useful product into various pieces with different sizes and the performance of a more precise cutting of the vegetable and consequently, greater usage of its edible parts.

It also cites as background, the patent application from the same applicant "Adaptive Cutting Method of vegetable with a tree-like structure and machine to carry out this cut" which is destined to vegetables such as broccoli which are distinguished by a common stem from which different branches originate, where the machine receives the vegetables of different sizes without preclassification and adapts the cutting height to the size of each of the vegetables, obtaining in this way, pieces of vegetables with tree-like structures like that of the start but in a homogeneous size prepared for subsequent packaging.
The adaptive method object of this application isused in this invention for the adjustment of the tray height depending on the size of the vegetable to be cut.

### DESCRIPTION OF THE INVENTION

This invention refers to a machine according to claim 1 for cutting and extraction of the stem of vegetables with a tree-like structure, cauliflower type, and the cutting and extraction method of the stem with this machine, which provides pieces branched into different sizes of the edible part of the vegetable.
The machine is characterised as constituted by at least one tray in which the vegetable to be cut is deposited which slides by means of a horizontal structure and by several vertical slide guides with several cutting devices which consist of a cutting device for the separation of the useful tree-like part, a cutting device for the division of the stem into pieces, and a cutting device for the separation of the stem from the edible part.

Consequently in the same action, the recommended machine performs both the cutting as well as the extraction of the stem or hard part of the vegetable, cauliflower for example, discarding the minimum part of the useful product as possible.

The tray has a central concave shape on which the vegetable is placed in an inverted way, which means with the stem facing upwards so that the cutting devices extract the stem and cut the tree-like part once the tray has been situated under these cutting devices.
The cutting device which separates the useful tree-like material consists of a knife in a conical-cylinder shape on a head also in the same shape to thus facilitate the flow in the upward direction of the cut stem pieces which will remain in the interior.

This knife separates the useful material in several pieces which remain in its exterior.

The cutting device which divides the stem in several pieces consists of several knives located either in the interior or exterior of the conical-cylinder head in a blade form. These knives divide the stem into four pieces when the cutting devices descend on the vegetable.

In one potential implementation method, the cutting device for the stem separation consists of mobile knives located on top of the knives in blade form which perform the cut in a parallel plane to the tray, which have a cross shape whose 90° rotation around the axis which passes through the centre of the head detaches the four pieces in which the stem is divided from the vegetable.

The rotation of these knives takes place by means of a rotating pneumatic drive located in the upper part of the device.

The knives to cut the stem as well as a section of it can be horizontal or with a spherical cap shape. The configuration in a spherical cap permit greater usage of the material since the cutting element is inserted further into the vegetable removing a greater amount of stem.

As a complementary feature, and with the aim to achieve an even more efficient division of the edible part of the vegetable into portions, several knives have been placed in a radial direction outside of the conical-cylinder zone of the cutting head.

These knives can be removable or fixed, attached to the head by means of several screws. The knives have a cutting edge with an acute angle in relation to the wall of the cutting head for greater impact on the vegetable.
The descent system of the cutting devices can be pneumatic or hydraulic drive or a servomotor In the pneumatic drive, the cutting knives head descends with a fixed route defined by the pneumatic cylinder run, the cutting solution with lesser or greater removal of the material is performed by elevating the tray by means of the aforementioned mechanism with sensor. The hydraulic system works in the same way. The servomotor lowers the knives by means of a clasp nut with a servomotor which can vary the route of the cutting devices depending on the size of the vegetable to be cut.
The tray has height adjustment depending on the size of the vegetable by means of an ultrasound sensor which performs a reading of the vegetable size and based on this, it determines the height with a slight adjustment of the tray. In the case that the drive element of the cutting devices is a servomotor, it does not require the elevation of the tray as in the previous cases, since the cutting devices perform the height adjustment by means of the servomotor.
The machine for cutting and extraction of the vegetable stems has a ramp above the cutting zone for the elimination of the waste stems. These stems would fill the head of the cutting devices overflowing by its upper part and subsequently falling by means of the ramp.

Based on the described machine, the cutting and extraction method of stems of vegetables with a tree-like structure is performed in the following stages at minimum:
First stage: Advance the tray until it is located under the head with the cutting devices and adjust the height.
Second stage: Descent of the cutting devices which perform the separation of the useful tree-like material, division of the stem into pieces, and the separation of these stem pieces from the useful material and the ascent of the cutting devices.
   Third stage: Advance the tray with the vegetable pieces and accumulation of excess stems inside the head.
   In the first stage, the optimum height for the cutting depends on the descent system of the cutting devices. In the case that a servomotor is not used, the tray adjusts its height depending on the size of the vegetable by means of an ultrasound sensor which performs
   a reading and which determines the height with a slight adjustment of the tray. In the case that the descent system of the cutting devices consists of a servomotor, the tray adjustment is not required since the cutting head is what approaches
   The vegetable.
In the second stage, the descent system of the cutting devices can be pneumatic or hydraulic drive or by means of a servomotor. The cutting device which separates the the useful tree-like material consists of a knife in a conical-cylinder shape located on the lower end of head also with a conical-cylinder shape.
The cutting device which divides the stem in several pieces consists of several knives in a blade form located in the interior of the head.
The cutting device for the separation of the stem from the rest of the useful material consists of several knives in a cross located above the knives in a blade form whose 90° rotation detaches the stem of the useful part of the vegetable.
The tray continues advancing with the already cut vegetable and the stems accumulate in the interior of the Head until they overflow and descend by means of the ramp.

### DESCRIPTION OF THE DRAWINGS

This descriptive report is complemented with a set of plans which illustrate the preferential and never limitative example of the invention.

Figure 1 is a schematic representation with a perspective of the machine for cutting and extraction of the stem of vegetables with tree-like structure.

Figure 2 is a schematic representation with a perspective of the head and the cutting devices.

Figure 3 is a schematic representation of a cutting head on which a series of knives have been arranged in order to perform an even more efficient division of the edible part of the vegetable into portions.

### PREFERENTIAL IMPLEMENTATION OF THE INVENTION

This invention refers to a machine for cutting and extraction of the stem of vegetables with tree-like structure and the cutting and extraction method of the stem with this machine which provides pieces branched into different sizes for the edible part of the vegetable. The machine is characterised as constituted by at least one tray (1) in which the vegetable to be cut is deposited which slides by means of a horizontal structure(2) and by several vertical slide guides(3) with several cutting devices which consist of a cutting device for the separation of the useful tree-like material, a cutting device for the division of the stem into pieces, and a cutting device for the separation of the stem from the edible part. The tray (1) has a central concave shape (1.1) on which the vegetable is placed in an inverted way, which means with the stem facing upwards so that the cutting devices extract the stem and cut the tree-like part. The tray (1) previously advances until it is located under the cutting devices.

The cutting device which separates the useful tree-like material consists of a knife (4.1) in a conical-cylinder shape mounted on the lower end of head (4) also with the same shape.

The cutting device which divides the stem in several pieces consists of several knives (4.2) in a blade form located in the interior area of the conical-cylinder zone (4).
The cutting device for the stem separation consists of mobile knives (4.3) located on top of the knives (4.2) in blade form which perform the cut in a parallel plane to the tray, which have a cross shape whose 90° rotation around the axis which passes through the centre of the head (4) detaches the four pieces in which the stem is divided from the vegetable.

The rotation of these knives (4.3) in a cross takes place by means of a rotating pneumatic drive located in the upper part of the device.

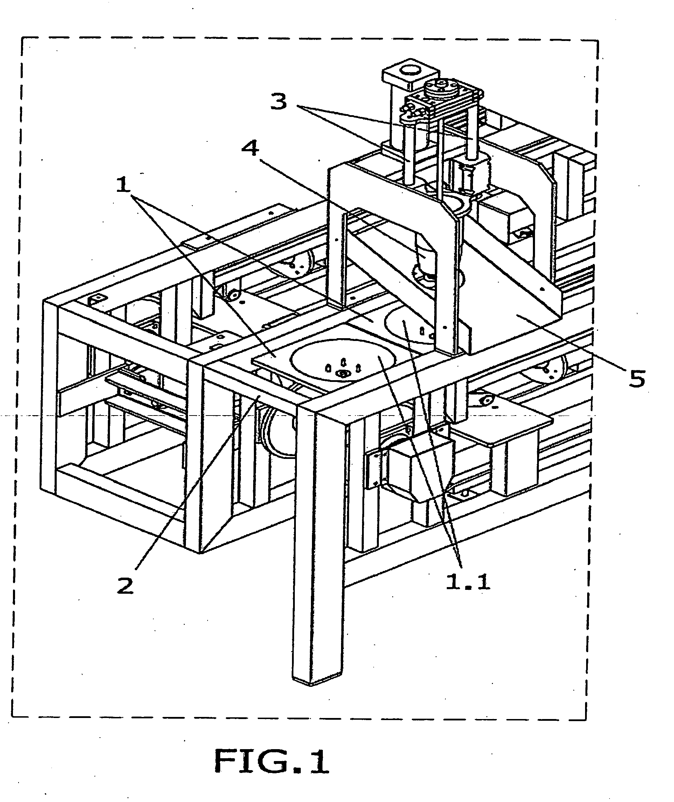

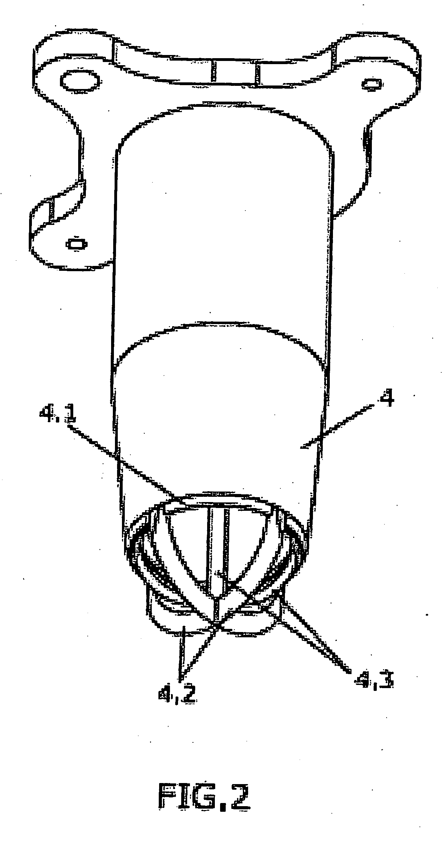

The knives to cut the stem (4.2) as well to cut its pieces (4.3) can be horizontal or with a spherical cap shape as represented in the Figures 1 and 2.

The descent system of the cutting devices can be pneumatic or hydraulic drive or by means of a servomotor.

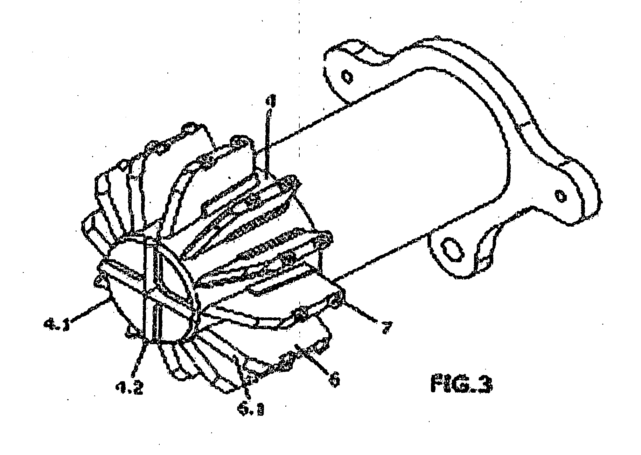

The machine for cutting and extraction of the vegetable stems has a ramp (5) above the cutting zone for the elimination of the waste stems. These stems would fill the head (4) of the cutting devices overflowing in its upper part and subsequently falling by the ramp (5).
The machine has an ultrasound sensor which performs the reading of the vegetable size and determines the height with a slight adjustment of the tray (1) so that depending on its size and the sensor reading, the optimum height is determined for the tray. In the case that the descent system of the cutting devices (4) is by means of a servomotor, the adjustment of the tray (1) height is not required since it is the head (4) itself which performs the adjustment for the optimum height according to the sensor data.
If one also seeks to achieve the cutting of the stem and its separation from the remainder, a more efficient division of the edible material in portions, it is possible to place a series of knives located in a radial direction in the exterior part of the cutting head (4) as shown in figure 3.

In figure 3, observe that outside the conical-cylinder zone of the cutting head (4), there are knives (6) which are situated in a radial direction. These knives (6) perform a more efficient division of the edible part of the vegetable into portions. Equally, we observe the knife (6.1) which performs the separation of the tree-like material of the vegetable from its stem, as well as the knife (4.2) which performs the division of the stem in four portions.

The knives (6) have a cutting edge (6.1) with an acute angle in relation to the wall of the cutting head (4) for greater impact on the vegetable. The knives (6) can be removable or fixed. In the preferential implementation shown in figure 1, the knives (6) are removable and are fixed in the head (1) by means of several screws (7).

Based on the described machine above, the cutting and extraction method of the stems of vegetables with a tree-like structure is performed in the following stages at minimum:
First stage: Advance the tray (1) until it is located under the head (4) with the cutting devices and adjust its height.
   Second stage: Descent of the cutting devices which perform the separation of the useful tree-like material, division of the stem into pieces, and the separation of these stem pieces from the useful material and the ascent of the cutting devices.
Third stage: Advance the tray (1) and accumulation of excess stems of the vegetable in the interior of the head (4).
   In the first stage of the adjustment of the optimum height of the cut depends on the descent system of the cutting devices. In the case that a servomotor is not used, the tray (1) adjusts its height depending on the size of the vegetable by means of an ultrasound sensor which performs a reading and which determines the height with a slight adjustment of the tray (1). In the case that the descent system of the cutting devices is a servomotor, the tray (1) adjustment is not required since the cutting head (4) is what approaches the vegetable.
   In the second stage, the descent system of the cutting devices can be pneumatic or hydraulic drive or by means of a servomotor where the cutting devices consist of a knife (4.1) in a conical-cylinder shape mounted on the lower end of head (4) also with the same shape. The cutting devices which divide the stem in pieces consists of several knives (4.2) arranged in a blade form located in the interior area of the conical-cylinder zone and the cutting devices for the stem separation consists of mobile knives (4.3) arranged on top of the knives (4.2) in blade form which perform the cut in a parallel plane to the tray, which have a cross shape whose 90° rotation around the axis which passes through the centre of the head (4) detaches the four pieces in which the stem is divided from the vegetable.
   In stage 3, the excess stems accumulate in the interior of the head (4) until they overflow and descend by means of a ramp (5).
   Variations in the materials, form, size, and layout of the component elements will not alter the essential nature of the invention, where said components are described in a non-limitative way, which is sufficient to proceed to its reproduction by an expert.

## Claims

1. Machine for cutting and extraction of stem of vegetables with tree-like structure which provides pieces branched in different sizes of the edible part of the vegetable, constituted by at least one tray (1) in which the vegetable to be cut is deposited which slides by means of a horizontal structure (2) and by several vertical slide guides (3) with several cutting devices which consist of a cutting device for the separation of the useful tree-like material, a cutting device for the division of the stem into pieces and further **characterized by** a cutting device for the separation of the stem from the edible part.

2. Machine for cutting and extraction of stem of vegetables with tree-like structure, according to claim 1, **characterised** because the tray (1) has a concave central shape (1.1) on which the vegetable is placed in an inverted way.

3. Machine for cutting and extraction of stem of vegetables with tree-like structure, according to claim 1, **characterised** because the cutting device for the separation of the useful tree-like material consists of a knife (4.1) in a conical-cylinder shape located on the lower end of head (4) also with a conical-cylinder shape.

4. Machine for cutting and extraction of stem of vegetables with tree-like structure, according to claim 1, **characterised** because the cutting device for the division of the stem into pieces consists of several knives (4.2) in blade form located in the interior area of the conical-cylinder head (4).

5. Machine for cutting and extraction of stem of vegetables with tree-like structure, according to claim 1, **characterised** because the cutting device for the separation of the stem consists of several mobile knives (4.3) in a cross shape whose 90° rotation detaches the stem.

6. Machine for cutting and extraction of the stem of vegetables with tree-like structure, according to claim 5, **characterised** because the rotation of the knives (4.3) in a cross takes place by means of a rotating pneumatic drive located in the upper part of the device.

7. Machine for cutting and extraction of stem of vegetables with tree-like structure, according to claims 4 and 5, **characterised** because the cutting knives for the cutting of the stem (4.2) and the knives for their separation (4.3) are horizontal.

8. Machine for cutting and extraction of stem of vegetables with tree-like structure, according to claims 4 and 5, **characterised** because the cutting knives for the cutting of the stem (4.2) and the knives for their separation (4.3) present a semi-spherical cap shape.

9. Machine for cutting and extraction of stem of vegetables with tree-like structure, according to claim 1, **characterised** because the ultrasound sensor performs a reading of the vegetable size and determines the height either with a slight adjustment of the tray (1) or the descent of the head (4).

10. Machine for cutting and extraction of stem of vegetables with tree-like structure, according to claim 1, **characterised** because the descent system of the cutting devices can be pneumatic or hydraulic drive or by means of a servomotor.

11. Machine for cutting and extraction of stem of vegetables with tree-like structure, according to claim 1, **characterised** because it has a ramp (5) for the elimination of the waste stems.

12. Machine for cutting and extraction of stem of vegetables with tree-like structure, according to claim 1 or 3 or 4 or 5, **characterised** because on the cutting devices it is additionally equipped with devices for the division of the tree-like material into consistent portions in a layout of knives (6) located outside the cutting head (4) and in a radial direction.

13. Machine for cutting and extraction of stem of vegetables with tree-like structure, according to claim 12, **characterised** because the knives (6) are located in the conical-cylinder zone of the cutting head (4).

14. Machine for cutting and extraction of stem of vegetables with tree-like structure, according to claim 12, **characterised** because the knives (6) are removable.

15. Machine for cutting and extraction of stem of vegetables with tree-like structure, according to claim 14, **characterised** because the knives (6) are joined to a cutting head (4) by means of screws (7).

16. Machine for cutting and extraction of stem of vegetables with tree-like structure, according to claim 12, **characterised** because the knives (6) possess a cutting edge (6.1) in an acute angle in relation to the wall of the head (1).

17. Method for cutting and extraction of stem of vegetables with tree-like structure, according to the machine defined in claim 1, **characterised** because it is implemented in the following stages at minimum:
- First stage: Advance the tray (1) until it is located under the cutting devices and adjust its height.
- Second stage: Descent of the cutting devices which perform the separation of the tree-like material, division of the stem into pieces, and the separation of these stem pieces from the useful material and the ascent of the cutting devices.
- Third stage: Advance the tray and accumulation of excess stems in the interior of the head (4).

18. Method for cutting and extraction of stem of vegetables with tree-like structure, according to claim 17, **characterised** because in the first stage, the adjustment of the optimum cutting height is performed depending on the descent system of the cutting devices (4); when a servomotor is not used, the tray (1) adjusts its height based on the vegetable size by means of an ultrasound sensor which performs a reading and determines the height with a slight adjustment of the tray (1); in the case in which the descent system is a servomotor, the cutting head (4) is what approaches the vegetable.

19. Method for cutting and extraction of stem of vegetables with tree-like structure, according to claim 17, **characterised** because in the second stage, the descent system of the cutting devices can be pneumatic or hydraulic drive or by means of a servomotor.

20. Method for cutting and extraction of the stem of vegetables with tree-like structure, according to claim 17, **characterised** because in the second stage, the cutting device which separates the useful tree-like material consists of a knife (4.1) in a conical-cylinder shape mounted on the lower end of head (4) also with conical-cylinder shape.

21. Method for cutting and extraction of stem of vegetables with tree-like structure, according to claim 17, **characterised** because in the second stage, the cutting device which divides the stem in pieces consists of several knives (4.2) in blade form located in the interior of the conical-cylinder head (4).

22. Method for cutting and extraction of the stem of vegetables such as those with tree-like structure, according to claim 17, **characterised** because in the second stage, the cutting device for separating the stem consists several mobile knives (4.3) in a cross shape whose 90° rotation detaches the stem.

23. Method for cutting and extraction of stem of vegetables with tree-like structure, according to claim 17, **characterised** because in the third stage, the excess stems are accumulated in the interior of the head (4) until they reach a sufficient height and overflow descending by means of a ramp (5).

## Patentansprüche

1. Eine Maschine zum Schneiden und zur Extrahierung des Stiels von Gemüsen mit einer baumartigen Struktur, welche in unterschiedliche Größen verzweigte Teile des verzehrbaren Teils des Gemüse zur Verfügung stellt, gebildet aus mindestens einer Ablage (1), in der das zu schneidende Gemüse abgelegt wird, die mittels einer horizontalen Struktur (2) und mittels mehrerer vertikaler Gleitführungen (3) mit mehreren Schneidvorrichtungen gleitet, welche aus einer Schneidvorrichtung zur Trennung des verwendbaren baumartigen Materials und einer Schneidvorrichtung für die Teilung des Stiels in Stücke bestehen und weiterhin durch eine Schneidvorrichtung zur Trennung des Stiels vom verzehrbaren Teil **gekennzeichnet** ist.

2. Eine Maschine zum Schneiden und zur Extrahierung des Stiels von Gemüsen mit einer baumartigen Struktur nach Anspruch 1, **dadurch gekennzeichnet, dass** die Ablage (1) eine konkave zentrale Form (1.1) besitzt, auf die das Gemüse auf eine umgekehrte Weise platziert wird.

3. Eine Maschine zum Schneiden und zur Extrahierung des Stiels von Gemüsen mit einer baumartigen Struktur nach Anspruch 1, **dadurch gekennzeichnet, dass** die Schneidvorrichtung zur Trennung des verwendbaren baumartigen Materials aus einem Messer (4.1) mit einer konisch-zylinderförmigen Form besteht, das sich an dem unteren Ende des ebenfalls konisch-zylinderförmigen Kopfes (4) befindet.

4. Eine Maschine zum Schneiden und zur Extrahierung des Stiels von Gemüsen mit einer baumartigen Struktur nach Anspruch 1, **dadurch gekennzeichnet, dass** die Schneidvorrichtung zur Teilung des Stiels in Stücke aus mehreren Messern (4.2) mit einer schneideartigen Form besteht, welche sich in dem inneren Bereich des konisch-zylinderförmigen Kopfes (4) befinden.

5. Eine Maschine zum Schneiden und zur Extrahierung des Stiels von Gemüsen mit einer baumartigen Struktur nach Anspruch 1, **dadurch gekennzeichnet, dass** die Schneidvorrichtung zur Trennung des Stiels aus mehreren beweglichen Messern (4.3) in einer Kreuzform besteht, deren 90° Rotation den Stiel abtrennt.

6. Eine Maschine zum Schneiden und zur Extrahierung des Stiels von Gemüsen mit einer baumartigen Struktur nach Anspruch 5, **dadurch gekennzeichnet, dass** die Rotation der Messer (4.3) in einem Kreuz mittels eines rotierenden Druckluftantriebs stattfindet, welcher sich in dem oberen Teil der Vorrichtung befindet.

7. Eine Maschine zum Schneiden und zur Extrahierung des Stiels von Gemüsen mit einer baumartigen Struktur nach Anspruch 4 und 5, **dadurch gekennzeichnet, dass** die Schneidmesser zum Schneiden des Stiels (4.2) und die Messer zu dessen Trennung (4.3) horizontal sind.

8. Eine Maschine zum Schneiden und zur Extrahierung des Stiels von Gemüsen mit einer baumartigen Struktur nach Anspruch 4 und 5, **dadurch gekennzeichnet, dass** die Schneidmesser zum Schneiden des Stiels (4.2) und die Messer zu dessen Trennung (4.3) eine halbkugelförmige Deckelform aufweisen.

9. Eine Maschine zum Schneiden und zur Extrahierung des Stiels von Gemüsen mit einer baumartigen Struktur nach Anspruch 1, **dadurch gekennzeichnet, dass** der Ultraschallsensor die Ablesung der Größe des Gemüses durchführt und die Höhe entweder mit einer leichten Anpassung der Ablage (1) beziehungsweise der Senkung des Kopfes (4) bestimmt.

10. Eine Maschine zum Schneiden und zur Extrahierung des Stiels von Gemüsen mit einer baumartigen Struktur nach Anspruch 1, **dadurch gekennzeichnet, dass** das Senksystem der Schneidvorrichtungen ein Luftdruck- oder ein Hydraulikantrieb sein oder mittels eines Servomotors erfolgen kann.

11. Eine Maschine zum Schneiden und zur Extrahierung des Stiels von Gemüsen mit einer baumartigen Struktur nach Anspruch 1, **dadurch gekennzeichnet, dass** diese eine Rampe (5) zur Eliminierung der Abfallstiele besitzt.

12. Eine Maschine zum Schneiden und zur Extrahierung des Stiels von Gemüsen mit einer baumartigen Struktur nach Anspruch 1 oder 3 oder 4 oder 5, **dadurch gekennzeichnet, dass** diese auf den Schneidvorrichtungen zusätzlich mit Vorrichtungen zur Teilung des baumartigen Materials in gleichmäßige Portionen mittels einer Anordnung von Messern (6) ausgestattet ist, welche sich außerhalb des Schneidkopfes (4) und in radialer Richtung befinden.

13. Eine Maschine zum Schneiden und zur Extrahierung des Stiels von Gemüsen mit einer baumartigen Struktur nach Anspruch 12, **dadurch gekennzeichnet, dass** sich die Messer (6) in dem konisch-zylinderförmigen Bereich des Schneidkopfes (4) befinden.

14. Eine Maschine zum Schneiden und zur Extrahierung des Stiels von Gemüsen mit einer baumartigen Struktur nach Anspruch 12, **dadurch gekennzeichnet, dass** die Messer (6) abnehmbar sind.

15. Eine Maschine zum Schneiden und zur Extrahierung des Stiels von Gemüsen mit einer baumartigen Struktur nach Anspruch 14, **dadurch gekennzeichnet, dass** die Messer (6) mittels Schrauben (7) mit dem Schneidkopf (4) verbunden sind.

16. Eine Maschine zum Schneiden und zur Extrahierung des Stiels von Gemüsen mit einer baumartigen Struktur nach Anspruch 12, **dadurch gekennzeichnet, dass** die Messer (6) eine Schnittkante (6.1) in einem spitzen Winkel in Bezug auf die Wand des Kopfes (1) besitzen.

17. Eine Methode zum Schneiden und zur Extrahierung des Stiels von Gemüsen mit einer baumartigen Struktur entsprechend der Maschine nach Anspruch 1, **dadurch gekennzeichnet, dass** diese mindestens in den folgenden Schritten ausgeführt ist:
- Erster Schritt: Beförderung der Ablage (1), bis diese unter den Schneidvorrichtungen befindlich ist und Anpassung deren Höhe.
- Zweiter Schritt: Senkung der Schneidvorrichtungen, welche die Trennung des baumartigen Materials durchführen, Teilung des Stiels in Stücke und die Trennung dieser Stielstücke von dem verwendbaren Material sowie die Anhebung der Schneidvorrichtungen.
- Dritter Schritt: Beförderung der Ablage und Ansammlung von überschüssigen Stielen im Inneren des Kopfes (4).

18. Eine Methode zum Schneiden und zur Extrahierung des Stiels von Gemüsen mit einer baumartigen Struktur nach Anspruch 17, **dadurch gekennzeichnet, dass** in dem ersten Schritt die Anpassung der optimalen Schneidhöhe in Abhängigkeit von dem Senksystem der Schneidvorrichtungen (4) durchgeführt wird; wenn kein Servomotor verwendet wird, passt die Ablage (1) ihre Höhe basierend auf der Größe des Gemüses mittels eines Ultraschallsensors an, der eine Ablesung durchführt und die Höhe mittels einer leichten Anpassung der Ablage (1) bestimmt; in dem Falle, in dem es sich bei dem Senksystem um einen Servomotor handelt, ist es der Schneidkopf (4), welcher sich dem Gemüse nähert.

19. Eine Methode zum Schneiden und zur Extrahierung des Stiels von Gemüsen mit einer baumartigen Struktur nach Anspruch 17, **dadurch gekennzeichnet, dass** in dem zweiten Schritt das Senksystem der Schneidvorrichtungen ein Luftdruck- oder ein Hydraulikantrieb sein oder mittels eines Servomotors erfolgen kann

20. Eine Methode zum Schneiden und zur Extrahierung des Stiels von Gemüsen mit einer baumartigen Struktur nach Anspruch 17, **dadurch gekennzeichnet, dass** in dem zweiten Schritt die Schneidvorrichtung, welche das verwendbare baumartige Material trennt, aus einem Messer (4.1) mit einer konisch-zylinderförmigen Form besteht, das an dem unteren Ende des ebenfalls konisch-zylinderförmigen Kopfes (4) montiert ist.

21. Eine Methode zum Schneiden und zur Extrahierung des Stiels von Gemüsen mit einer baumartigen Struktur nach Anspruch 17, **dadurch gekennzeichnet, dass** in dem zweiten Schritt die Schneidvorrichtung, welche den Stiel in Stücke trennt, aus mehreren Messern (4.2) mit einer schneideartigen Form besteht, welche sich in dem Inneren des konisch-zylinderförmigen Kopfes (4) befinden.

22. Eine Methode zum Schneiden und zur Extrahierung des Stiels von Gemüsen wie denjenigen mit einer baumartigen Struktur nach Anspruch 17, **dadurch gekennzeichnet, dass** in dem zweiten Schritt die Schneidvorrichtung zur Trennung des Stiels aus mehreren beweglichen Messern (4.3) in einer Kreuzform besteht, deren 90° Rotation den Stiel abtrennt.

23. Eine Methode zum Schneiden und zur Extrahierung des Stiels von Gemüsen mit einer baumartigen Struktur nach Anspruch 17, **dadurch gekennzeichnet, dass** in dem dritten Schritt die überschüssigen Stiele im Inneren des Kopfes (4) angesammelt werden, bis diese eine genügende Höhe erreichen und überlaufen, indem sie mittels einer Rampe (5) nach unten fallen.

## Revendications

1. Machine de tranchage et d'extraction de tiges de légumes à structure arborescente permettant d'obtenir des tranches ramifiées de tailles diverses des parties comestibles du légume, comprenant au moins un chariot (1) destiné à accueillir le légume à trancher, coulissant à l'aide d'une structure horizontale (2) et plusieurs guides verticaux (3) comportant plusieurs dispositifs tranchants constitués d'un dispositif tranchant permettant de séparer les éléments arborescents utiles, d'un dispositif tranchant permettant de trancher la tige en plusieurs pièces et également **caractérisé en ce qu'**elle comprend un dispositif tranchant permettant de trancher la tige de la partie comestible.

2. Machine de tranchage et d'extraction de tiges de légumes à structure arborescente, selon la revendication 1, **caractérisée en ce que** le chariot (1) comprend une partie centrale concave (1.1) sur laquelle le légume est placé à l'envers.

3. Machine de tranchage et d'extraction de tiges de légumes a structure arborescente, selon la revendication 1, **caractérisée en ce que** le dispositif tranchant permettant de séparer les éléments arborescents utiles est constitué d'un couteau (4.1) de forme conique cylindrique placé sur l'extrémité inférieure d'une tête (4) qui possède également une forme conique cylindrique.

4. Machine de tranchage et d'extraction de tiges de légumes à structure arborescente, selon la revendication 1, **caractérisée en ce que** le dispositif tranchant permettant de trancher la tige en plusieurs pièces est constitué de plusieurs couteaux (4.2) en forme de lame situés dans la partie interne de la tête conique cylindrique (4).

5. Machine de tranchage et d'extraction de tiges de légumes à structure arborescente, selon la revendication 1, **caractérisée en ce que** le dispositif tranchant permettant de trancher la tige est constitué de plusieurs couteaux mobiles (4.3) disposés en forme de croix qui effectuent une rotation à 90° pour découper la tige.

6. Machine de tranchage et d'extraction de tiges de légumes à structure arborescente, selon la revendication 5, **caractérisée en ce que** la rotation des couteaux (4.3) en croix s'effectue au moyen d'un entrainement rotatif par commande pneumatique placé dans la partie supérieure de la machine.

7. Machine de tranchage et d'extraction de tiges de légumes à structure arborescente, selon les revendications 4 et 5, **caractérisée en ce que** les couteaux à trancher les tiges (4.2) et les couteaux permettant de les séparer (4.3) sont horizontaux.

8. Machine de tranchage et d'extraction de tiges de légumes à structure arborescente, selon les revendications 4 et 5, **caractérisée en ce que** les couteaux à trancher les tiges (4.2) et les couteaux permettant de les séparer (4.3) sont en forme de capuchon semi sphérique.

9. Machine de tranchage et d'extraction de tiges de légumes à structure arborescente, selon la revendication 1, **caractérisée en ce que** le capteur à ultrasons reconnait la taille des légumes et détermine la bonne hauteur soit en ajustant légèrement le chariot (1) soit en faisant descendre la tête (4).

10. Machine de tranchage et d'extraction de tiges de légumes à structure arborescente, selon la revendication 1, **caractérisée en ce que** le système de descente des dispositifs tranchants peut être à entrainement pneumatique ou hydraulique ou bien peut être activé au moyen d'un servomoteur.

11. Machine de tranchage et d'extraction de tiges de légumes à structure arborescente, selon la revendication 1, **caractérisée en ce qu'**elle est dotée d'une rampe (5) permettant l'évacuation des déchets.

12. Machine de tranchage et d'extraction de tiges de légumes à structure arborescente, selon les revendications 1 ou 3 ou 4 ou 5, **caractérisée en ce que** les dispositifs tranchants sont en outre équipés de dispositifs permettant de diviser les éléments arborescents en grosses portions dans la disposition des couteaux (6) situés à l'extérieur de la tête tranchante (4) dans une direction radiale.

13. Machine de tranchage et d'extraction de tiges de légumes à structure arborescente, selon la revendication 12, **caractérisée en ce que** les couteaux (6) sont placés dans la surface conique cylindrique de la tête tranchante (4).

14. Machine de tranchage et d'extraction de tiges de légumes à structure arborescente, selon la revendication 12, **caractérisée en ce que** les couteaux (6) sont amovibles.

15. Machine de tranchage et d'extraction de tiges de légumes à structure arborescente, selon la revendication 14, **caractérisée en ce que** les couteaux (6) sont reliés a une tête tranchante (4) au moyen de vis (7).

16. Machine de tranchage et d'extraction de tiges de légumes à structure arborescente, selon la revendication 12, **caractérisée en ce que** les couteaux (6) possèdent une surface tranchante (6.1) à angle vif par rapport à la paroi de la tête (1).

17. Machine de tranchage et d'extraction de tiges de légumes à structure arborescente, selon la machine décrite dans la revendication 1, **caractérisée en ce qu'**elle est mise en oeuvre en suivant au moins les étapes suivantes :
- Première étape : avancer le chariot (1) jusqu'à ce qu'il se trouve en dessous des dispositifs tranchants et régler sa hauteur.
- Deuxième étape : faire descendre les dispositifs tranchants permettant de séparer les éléments arborescents, de trancher la tige en plusieurs pièces et de séparer ces pièces des éléments utiles et remonter les dispositifs tranchants.
- Troisième étape: avancer le chariot avec les déchets de tige à l'intérieur de la tête (4).

18. Une méthode pour trancher et extraire les tiges de légumes à structure arborescente, selon la revendication 17, **caractérisée en ce qu'**au cours de la première étape, le réglage de la hauteur optimale pour trancher est effectué en prenant en compte le système de descente des dispositifs tranchants (4); lorsque l'on utilise pas de servomoteur, le chariot (1) règle la hauteur en fonction de la taille des légumes au moyen d'un capteur a ultrasons qui effectue une lecture et détermine la bonne hauteur en ajustant légèrement le chariot (1); si l'on utilise un servomoteur comme système de descente, le légume est appréhendé par la tête tranchante (4).

19. Une méthode pour trancher et extraire les tiges de légumes à structure arborescente, selon la revendication 17, **caractérisée en ce qu'**au cours de la deuxième étape, le système de descente des dispositifs tranchants peut être à entrainement pneumatique ou hydraulique ou bien peut être activé au moyen d'un servomoteur.

20. Une méthode pour trancher et extraire les tiges de légumes à structure arborescente, selon la revendication 17, **caractérisée en ce qu'**au cours de la deuxième étape, le dispositif tranchant permettant de séparer les éléments arborescents est constitué d'un couteau (4.1) de forme conique cylindrique fixé sur l'extrémité inférieure de la tête (4) qui possède également une forme conique cylindrique.

21. Une méthode pour trancher et extraire les tiges de légumes à structure arborescente, selon la revendication 17, **caractérisée en ce qu'**au cours de la deuxième étape, le dispositif tranchant permettant de trancher la tige en plusieurs pièces est constitué de plusieurs couteaux (4.2) en forme de capuchon situés a l'intérieur de la tête conique cylindrique (4).

22. Une méthode pour trancher et extraire les tiges de légumes à structure arborescente, selon la revendication 17, **caractérisée en ce qu'**au cours de la deuxième étape, le dispositif tranchant permettant de séparer les tiges est constitué de plusieurs couteaux mobiles (4.3) disposés en forme de croix qui effectuent une rotation à 90° pour découper la tige.

23. Une méthode pour trancher et extraire les tiges de légumes à structure arborescente, selon la revendication 17, **caractérisée en ce qu'**au cours de la troisième étape, les déchets des tiges sont accumulés à l'intérieur de la tête (4) jusqu'à ce qu'ils atteignent une hauteur suffisante pour être évacués en glissant sur une rampe (5).
